# EUROPÄISCHE PATENTSCHRIFT

(11) **EP 1 183 474 B1**
(45) Veröffentlichungstag und Bekanntmachung des Hinweises auf die Patenterteilung: **25.02.2004**
(21) Anmeldenummer: 00929528.8
(22) Anmeldetag: 15.05.2000
(51) Int. Cl.: F16B 12/24

(54) **Befestigungselement zur Befestigung von Bauteilen an Möbelteilen oder Möbelteile aneinander**
Fastening element for fastening components to parts of furniture or parts of furniture to one another
Dispositif de fixation permettant de fixer des éléments de construction à des parties de meuble, ou des parties de meubles entre elles

(30) Priorität: 19.05.1999 DE 19923107
(43) Veröffentlichungstag der Anmeldung: 06.03.2002
(73) Patentinhaber: Niedermayer, Hans, 71706 Markgröningen (DE); Mallinowski, Ivan, 52441 Linnich (DE); Basler, Helmut, 73034 Eislingen/Fils (DE)
(72) Erfinder: Niedermayer, Hans, 71706 Markgröningen (DE); Mallinowski, Ivan, 52441 Linnich (DE); Basler, Helmut, 73034 Eislingen/Fils (DE)
(74) Vertreter: Dreiss, Uwe, Prof. Dr. jur. Dipl.-Ing. M.Sc.
(86) Internationale Anmeldenummer: PCT/EP2000/004340
(87) Internationale Veröffentlichungsnummer: WO 2000/071901

(56) Entgegenhaltungen:
- EP-A- 0 545 158
- DE-A- 3 318 262

## Beschreibung

Die Erfindung betrifft eine Befestigungsvorrichtung mit den Merkmalen des Oberbegriffes des Patentanspruches.

Man befestigt heutzutage im Allgemeinen einen Griff an der Frontplatte einer Schublade derart, dass von der Schubladeninnenseite her in das Ende des Griffes, der an einer Schubladen-Frontplatte anliegen soll, eine Schraube eingeschraubt wird. Diese wird durch eine Bohrung in der Frontplatte hindurchgeführt. Es ist also erforderlich, in die Frontplatte Durchgangslöcher zu bohren und anschließend von der Innenseite der Frontplatte her die Schrauben zu verschrauben. Dieses ist für eine Serienherstellung in der Möbelindustrie (z. B. bei Küchenmöbeln) sehr aufwendig. Es erfordert Zeit, zumal man zur Innenseite der Schublade nicht ungehinderten Zugang hat. Die von der Innenseite der Frontplatte her sichtbaren Köpfe der Schrauben stören optisch und behindern, wenn sie nicht genau versenkt sind, sondern etwas über die Fläche hervorstehen, die Handhabung. Ferner sind sie typische Schmutzablageflächen. Dasselbe gilt für die Befestigung von Möbelteilen, also z. B. zweier Möbelkorpusse, aneinander.

Eine Vorrichtung, die im Prinzip die Merkmale des Oberbegriffs des Anspruches 1 aufweist, ist aus der DE-GM 68 01 049 bekannt, wenngleich dort der Stift die Nut und der Dübel den Bund aufweist. Um ein Einschnappen des an der Innenwandung der Hülse vorgesehenen Wulstes in die Nut (Einpass) des Stiftes zu ermöglichen, ist auf der Außenseite der Hülse eine Ringnut vorgesehen, die ein Ausweichen des Materials der Hülse radial nach außen zulässt, weil sonst ein Nachaußendrücken der Wulst beim Einschnappen nicht möglich wäre. Würde man versuchen, eine solche Verbindung wieder durch Herausziehen des Stiftes zu lösen, so würde man die Hülse mit herausziehen, da bei einer solchen Anordnung die zum Lösen der Schnappverbindung
erforderliche Kraft größer ist als die Kraft, mit der der Dübel im Loch gehalten wird und die dem Herausziehen der Hülse entgegenwirkt.

Die DE-GM 19 89 554 zeigt einen großvolumigen Kunststoffniet, bei dem ein mit einer Wulst versehener Stift in einen mit einer Ringnut versehenen Dübel eingesteckt wird. Für das Ausweichen des um die Ringnut herum vorhandenen Materials beim Eindrücken des am Stift vorgesehenen Wulstes in die Ringnut am Dübel ist kein Raum vorhanden, so dass hier, was in diesem Fall auch erwünscht ist, ein erheblicher Einpressdruck erforderlich ist. Dies hat ebenfalls zur Folge, dass auch hier aus den oben dargelegten Gründen ein Herausziehen bei gleichzeitigem Verbleib des Dübels im Möbelteil nicht möglich ist, sondern dass beim Herausziehen des Stiftes der Dübel mit herausgezogen wird.

Aus der DE-GM 1 829 140 ist eine aus Einsteckstift und Befestigungshülse bestehende Vorrichtung bekannt, die als Lagerhülse für Möbel- und Apparaterollen ausgebildet ist. Die Hülse ist, um ein Festsitzen in Ihrem Rohrloch zu bewirken und zu verstärken, auf ihrer Außenseite mit Längsrippen versehen. An ihrer Innenwand weist sie in die Halsnute des Lenkgabelstiftes eingreifende Querrippen auf, die so viel federn, dass sie beim Eindrücken des Gabelstiftes in die Halsnute einspringen und so den Gabelstift in der Hülse zu halten. Die Hülse wird durch

Festschrauben an dem Möbelfuß in ihrem Loch festgehalten. Der Sitz der Hülse im Loch reicht als solcher nicht aus, um zu verhindern, dass beim Herausziehen des Gabelstiftes die Hülse mit herausgezogen wird.

Aus der DE 297 22 265 U1 ist ein Möbelbeschlag bekannt, bei dem ein Dübel in eine Bohrung eingesetzt wird, wobei in den Dübel ein als Zuganker ausgebildeter Spreizteil eingreift. Um ein Spreizen des Zugankers im Möbelteil zu erreichen, muss der mit dem Zuganker drehbar verbundene Kipphebel gekippt werden. Dies ist umständlich und für einfache Verbindungen, z. B. eines Griffes an einer Schublade, viel zu aufwendig. Außerdem stört der von außen sichtbare Kipphebel.

Aus der US 637 141 ist eine Vorrichtung zum Aneinanderfügen von zwei je ein Sackloch aufweisenden Platten bekannt geworden. Für jedes Sackloch ist eine Einsteckhülse vorgesehen. Die Einsteckhülse weist einen größeren zylindrischen Teil mit einem die Einstecktiefe begrenzenden Bund und einen in Einsteckrichtung vorne an diesen anschließenden Teil mit geringerem Durchmesser auf. Dieser Teil ist geschlitzt und so geformt, dass in Form nach einwärts gerichteter Enden der Bereiche zwischen den Schlitzen Haken entstehen. Der größere zylindrische Teil weist nach außen gerichtete Haken auf, die aber beim Einsetzen nach einwärts gebogen sind. Zum Herstellen der Verbindung werden die Einsteckhülsen in die Sacklöcher eingesetzt. Dann wird ein Verbindungsbolzen in die in den Sacklöchern befindlichen Einsteckhülsen eingesteckt. Beim Einsetzen drückt die Spitze des Verbindungsbolzens die o. g. nach einwärts gerichteten Haken so weit auseinander, bis diese eine Nut an der Spitze des Verbindungsbolzens einschnappen. Gleichzeitig werden die nach außen gerichteten Haken der Einsteckhülsen nach außen und damit in die Wandung des Sackloches gedrückt. Eine solche Verbindung ist ohne Zerstörung der Haken nicht lösbar. Sie erfordert außerdem drei relativ komplizierte und sorgfältig aufeinander abgestimmte Bauteile. Außerdem müssen die Maße genau aufeinander abgestimmt sein.

Aufgabe der Erfindung ist es, Befestigungselemente zu entwickeln, die eine einfache Montage - ggf. Selbstmontage-durch den Benutzer, ermöglichen und qualitativ verbessert sind. Es soll auch ein einfaches Lösen der Verbindung ohne Zerstörung der Bauteile oder aufwendige Demontage möglich sein.

Erfindungsgemäß erfolgt die Lösung dieser Aufgabe mit einem Befestigungselement mit den Merkmalen des Patentanspruches 1.

Der Befestigungsstift ist mit einem Bauteil (z. B. einem Griff) verbunden und wird in das Befestigungselement, im Prinzip ein Dübel, eingeführt. Dieses sitzt in einem Sackloch oder Durchgangsloch in der Schublade oder in einem Möbelteil. Der Befestigungsstift drückt zunächst mit seinem zylindrischen Einführbereich den radial verengten und geschlitzten Befestigungsbereich des Befestigungselements so weit auseinander, dass es mit seinen Außenflächen fest an die Innenwand des Sackloches in der Frontplatte angepresst wird und sich dort ggf. mit Hilfe der an seiner Außenseite angebrachten Vorsprünge festkrallt. Bei weiterem Einführen des Befestigungsstiftes in den Dübel - also nachdem der Dübel in dem Sackloch bereits fest verankert ist - verformt der an dem Befestigungsstift vorgesehene Bund den Eingangsbereich des Dübels zwischen dessen Frontfläche und der Ringnut. Die Elastizität der Bauteile ist so bestimmt, dass dies mit einem normalen Kraftaufwand, d. h. durch Eindrücken, ohne besondere Werkzeuge möglich ist, z. B. mit einer Kraft von 20 kg. Dann schnappt der Bund in die Ringnut ein, wobei die Tendenz des während des Eindrückvorgangs sich verformenden elastischen Materials des Eingangsbereichs des Dübels und/oder des Bundes, seine nicht verformte Position anzunehmen, auf der letzten Wegstrecke des Eindrückweges des Befestigungsstiftes in den Dübel dazu führt, dass der Befestigungsstift sich selbst in die Durchgangsöffnung des Dübels bis zum formschlüssigen Sitz des Bundes in der Ringnut des Dübels "einzieht". Dieser Einschnapp- oder Selbsteinzieheffekt begünstigt die Montage bzw. zieht die miteinander zu befestigenden Bauteile aneinander, so dass nach außen auch keine unschönen ungleichmäßigen Fugen oder Abstände entstehen. Der Einschnappeffekt ist deutlich feststellbar, so dass die Person, die den Befestigungsvorgang durchführt, deutlich merkt, dass die Befestigung erfolgt ist. In dieser endgültigen Befestigungslage hat auch der Befestigungsstift eine exakt definierte Lage im Dübel, so dass die Abmessungen so bestimmt werden können, dass der Befestigungsstift den Griff in eine Anschlagsituation an der Frontfläche des Dübels bzw. der mit dieser bündigen Oberfläche des Möbelteils (Schublade) zieht. Die Montage kann auch einfach durch Ausziehen mit einer vorbestimmbaren Kraft wieder gelöst werden, und zwar wieder unter elastischer Verformung des Bundes und/oder des Materials zwischen Ringnut und Frontfläche des Dübels. Die dazu erforderliche Kraft beträgt z. B. 50 kg.

Ein Ausführungsbeispiel der Erfindung und ihrer vorteilhaften Weiterbildungen werden im Folgenden anhand der beigefügten Zeichnungen beschrieben. Es stellen dar:
- Fig. 1: Befestigungsstift 1 und Dübel 2 vor dem Einstecken;
- Fig. 2: Befestigungsstift 1 und Dübel 2 während der 1. Phase (Spreizung des Dübels) des Einsteckens;
- Fig. 3: Befestigungsstift 1 und Dübel 2 nach Abschluss der 2. Phase (Einschnappen), also in eingestecktem Zustand;
- Fig. 4: zwei zusammengebaute Möbeleinheiten.

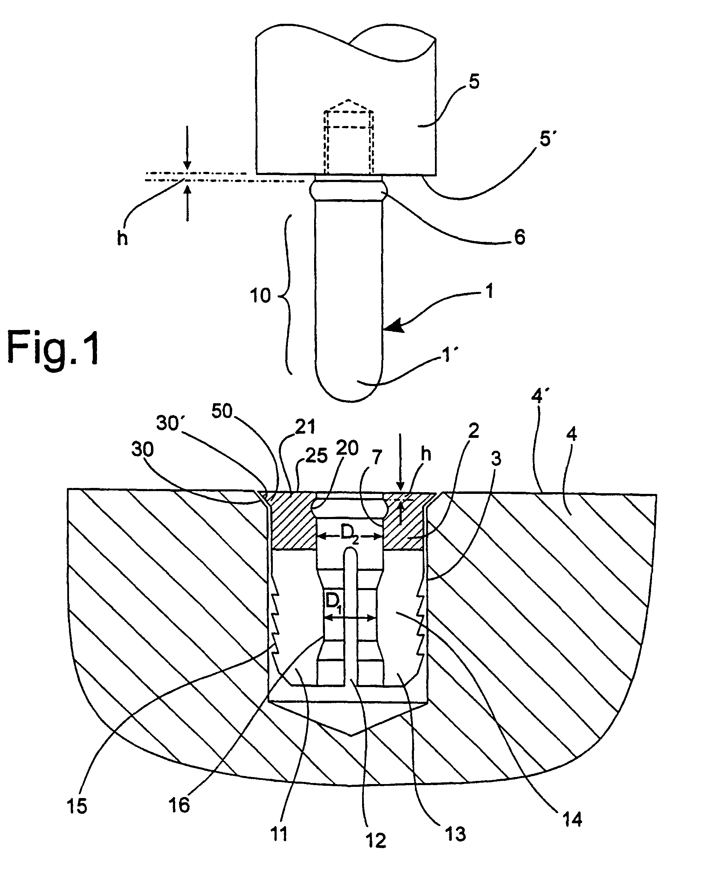

Fig. 1 zeigt das Befestigungssystem, bestehend aus dem Befestigungsstift 1 und dem Dübel 2. Der Befestigungsstift 1 ist mit einem Griff 5 verbunden. Der Dübel 2 ist in ein Sackloch 3 eines Möbelteils (z. B. der Frontplatte einer Schublade 4) eingesetzt. Im allgemeinen Sinne sind Möbelteil 4 und Griff 5 Befestigungspartner, die mittels des Stift/Dübel-Systems miteinander, und zwar in möglichst einfacher Weise zu verbinden sind. Die Verbindung des Griffes 5 mit dem Befestigungsstift 1 erfolgt z. B. derart, dass der Befestigungsstift 1 in den Griff 5 eingeschraubt ist. Anstelle an dem Griff 5 kann aber der Befestigungsstift 1 an einem anderen Möbelteil befestigt sein.

Der Befestigungsstift 1 hat einen zylindrischen Einführbereich 10. Das Ende 1' ist gerundet. Auf der dem Ende 1' entgegengesetzten Seite weist der Befestigungsstift 1 einen Bund 6 auf. Dieser Bund stellt eine radiale Erweiterung dar, vorzugsweise, aber nicht zwingend, mit kreissegmentförmigem Querschnitt. Der Bund 6 ist in einem Abstand h von der Anschlagfläche 5' angeordnet.

Der Dübel 2 ist hohlzylindrisch mit einer Durchgangsöffnung 7 ausgebildet. Die Linie 2' ist von der Oberfläche 4' des Möbelteils 4 etwa 1/4 der Länge des Dübels entfernt. Von dieser Linie 2' bis zum Ende ist der Dübel geschlitzt, im Ausführungsbeispiel mit vier Schlitzen, von denen die Schlitze 11, 12, 13 sichtbar und dargestellt sind. Der geschlitzte Befestigungsbereich 14 ist auf seiner Außenseite zur Verankerung mit Vorsprüngen 15 versehen.

Innerhalb des geschlitzen Befestigungsbereiches 14 befindet sich ein radial verengter Bereich 16. "Radial verengt" bedeutet, dass der Durchmesser D1 der Durchgangsöffnung 7 des Dübels 2 innerhalb dieses Bereiches 16 geringer als der Durchmesser D2 der Durchgangsöffnung 7 im nicht geschlitzen Bereich 17 ist. Der Durchmesser D2 ist im Wesentlichen gleich dem Durchmesser des Befestigungsstiftes 1 im Einführbereich 10, so dass der Befestigungsstift 1 mit seinem Einführbereich 10 problemlos in den nicht geschlitzten Eingangsbereich 17 des Dübels 2 eingeführt werden kann, beim Einführen in den radial verengten Bereich 16 den Dübel 2 jedoch aufweitet.

Die Durchgangsöffnung 7 weist im nicht geschlitzten Eingangsbereich 17 eine Innennut 20 auf, deren Querschnitt gleich dem Querschnitt des Bundes 16 am Stift 1 ist.

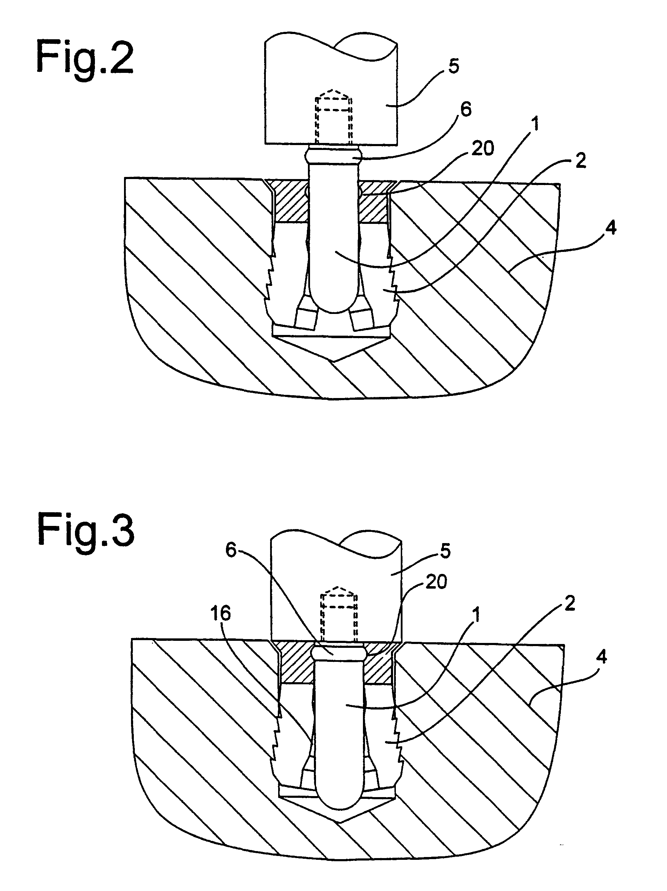

Führt man nun, wie in Fig. 2 gezeigt, den Stift in die Durchgangsbohrung 7 des Dübels 2 ein, so erfolgt eine Aufweitung oder Aufspreizung des geschlitzten Befestigungsbereiches 14, sobald der Einführbereich 10 in den radial verengten Bereich 16 eintritt. Dies ist die Folge davon, dass der Durchmesser D₁ kleiner als der Durchmesser D₂. Der Dübel 2 wird dann aufgeweitet. Die Vorsprünge 15 verankern sich im Sackloch 3.

Der Dübel 2 ist aus elastischem Material, z. B. Nylon. Die Elastizität dieses Materials und die Abmessungen des Bundes 6 einerseits und der Ringnut 20 andererseits sind so aufeinander abgestimmt, dass der Bund 6 in die Durchgangsöffnung 7 eingedrückt werden kann, und zwar unter elastischer Verformung des Bereiches 21 zwischen der Ringnut 20 und der mit der Oberfläche 4' des Möbelteils bündigen Frontfläche 25 des Dübels 2. Sobald dabei die Stelle des Bundes 6, die den größten Durchmesser hat, in den Bereich der Ringnut 20 eintritt, wirkt die Tendenz des elastisch verformten Bundes 6 und/oder Bereiches 21, in seine nicht verformte Ausgangslage zurückzukehren, derart, dass dadurch eine Kraft entsteht, die den Befestigungsstift 1 weiter in die Durchgangsöffnung 7 hineinzieht, bis der Bund 6 in die Ringnut 20 in einen formschlüssigen Sitz "einschnappt". Dies ist bei der Handhabung deutlich wahrnehmbar. Der geschilderte Einschnappeffekt ist somit auch ein Selbstmontage- und Selbstjustiereffekt. Dies ist in Fig. 3 dargestellt.

Wichtig ist dabei, dass beim Eindrücken des Befestigungsstiftes 1 das Auseinanderdrücken des Befestigungsbereiches 14 und damit die feste Verankerung des Dübels 2 im Sackloch 3 zeitlich vor dem Eintritt des Bunds 6 in den Eingangsbereich 17 erfolgt, so dass also die jeweils erforderlichen Kräfte nicht gleichzeitig aufgebracht werden müssen. Vielmehr wird die Einschubkraft von z. B. ca. 20 kg zuerst den Dübel 2 im Sackloch 4 durch Spreizung verankern und erst danach den Bund 6 in den Eingangsbereich 17 bis zur Nut 20 eindrücken. Dasselbe gilt vice versa beim Herausziehen des Befestigungsstiftes, also der Demontage.

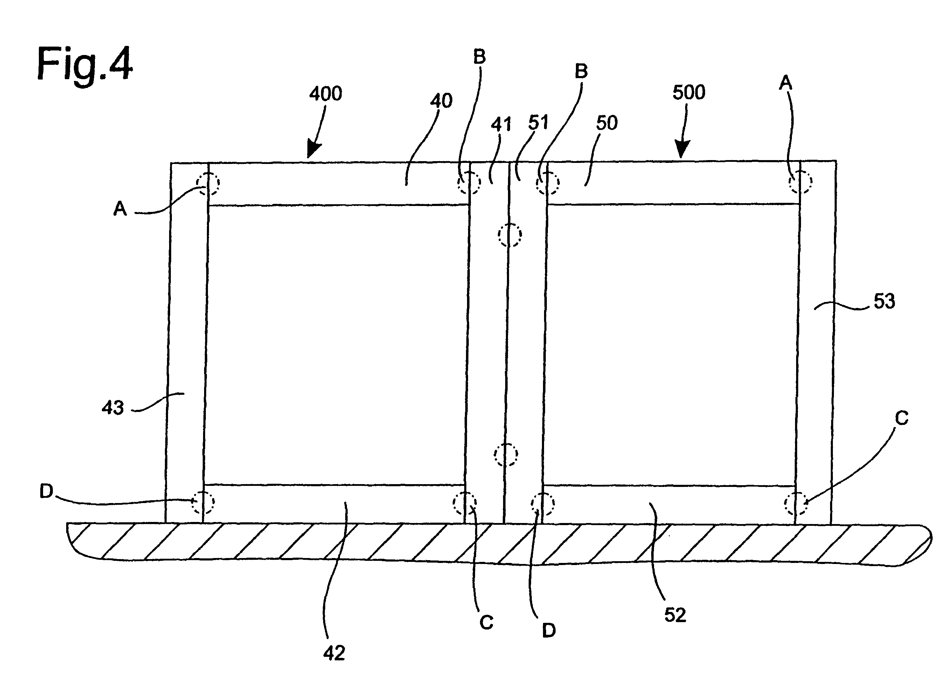

Fig. 4 zeigt den Aufbau und Zusammenbau zweier Möbeleinheiten 400 und 500. Beide Möbeleinheiten sind aus 4 Platten 40 - 43 bzw. 50 - 53 mit Hilfe von Befestigungssystemen (A, B, C, D) zusammengesetzt, die im Einzelnen in Fig. 4 nicht dargestellt, sondern nur mit strichpunktierten Kreisen angedeutet sind. Sie werden durch Befestigungsstifte 1 und Dübel 2 gemäß Fig. 1 - 3 gebildet. Die beiden Möbeleinheiten 400 und 500 werden zudem durch Befestigungssysteme E und F zusammengehalten. Hier ist der beschriebene Effekt, dass die beiden Teile sich (Befestigungsstift 1, Dübel 2) zueinander ziehen, besonders vorteilhaft, da auf diese Weise sichtbare oder gar schiefe Fugen zwischen den Einheiten, die durch Unebenheiten im Boden verursacht sind, vermieden bzw. ausgeglichen werden. Ferner sind an den Innenseiten keine Schrauben mehr ersichtlich.

### Bezugszeichenliste

- 1: Befestigungsstift
- 1': Ende des Stiftes, gerundet
- 2: Dübel, Befestigungselement
- 2': Linie
- 3: Sackloch
- 4: Möbelteil
- 4': Oberfläche von 4
- 5: Griff
- 5': Anschlagfläche von 5
- 6: Bund
- 7: Durchgangsöffnung in 2
- 10: Einführbereich von 1
- 11, 12, 13: Schlitze
- 14: Befestigungsbereich (geschlitzt) von 2
- 15: Vorsprünge auf der Außenseite von 14
- 16: radial verengter Bereich der Durchgangsöffnung 7
- 17: (nicht geschlitzter) Eingangsbereich von 2
- 20: Nut in 17
- 21: Bereich zwischen Nut 20 und Frontfläche 25 des Eingangsbereiches 17
- 25: Frontfläche von 2
- 30: Anschlagfläche des Sackloches 3
- 30': Anschlagfläche des Randes 31
- 31: Rand des Eingangsbereiches 17
- 40-43, 50-53: Platten
- A,B,C,D,E,F: Befestigungssysteme
- 400: Möbeleinheit
- 500: Möbeleinheit

## Patentansprüche

1. Befestigungsvorrichtung zur Befestigung eines Möbelteils (4) an einem mit einem Befestigungsstift (1) versehenen Bauteil (5) oder an einem weiteren Möbelteil, bei der ein mit einem Bund (6) versehener Befestigungsstift (1) in einen mit einer Ringnut (20) versehenen Dübel einschiebbar ist, wobei der Bund (6) in die Ringnut (20) elastisch einschnappt, **dadurch gekennzeichnet, dass**
(a) der Dübel (2) mit Schlitzen (11, 12, 13) versehen und aufspreizbar ist, und dass seine Durchgangsöffnung (7) im Bereich der Schlitze (11, 12, 13) eine radiale Verengung (16) aufweist;
(b) der Befestigungsstift (1) an seinem vorderen Ende einen zylindrischen Einführbereich (10) aufweist, und der Durchmesser (D₁) der genannten Verengung (16) kleiner als der Durchmesser (D₂) des Einführbereichs (10) ist;
(c) der Abstand der Verengung (16) von der Frontfläche (25) des Dübels (2) so bestimmt ist, dass beim Einführen des Befestigungsstiftes (1) der Eintritt des Bundes (6) in den Bereich (21) zwischen Frontfläche (25) und Ringnut (20) erst erfolgt, wenn der Einführbereich (10) des Befestigungsstiftes (1) die Spreizung des Dübels (2) bewirkt hat; und
(d) der Bereich (20) des Dübels (2) zwischen Ringnut (20) und Frontfläche (25) des Befestigungselements (2) und/oder der Bund (6) des Befestigungsstiftes (1) aus elastisch verformbarem Material besteht.

## Claims

1. Mounting device for mounting a furniture part (4) to a component (5) or another furniture part, said component or furniture part having a mounting pin (1), which is insertable into a dowel, which is provided with an annular groove (20), whereby the rim (6) elastically snaps into the groove (20), **characterized in that**
a) the dowel (2) is provided with slots (11, 12, 13) and can be spread apart, and **in that** its passage opening (7) is arranged to extend within the range of the slots (11, 12, 13) and has a portion (16) of radial reduction;
b) the mounting pin (1) at its leading end is provided with a cylindrical introducing portion (10), and **in that** the diameter (D₁) of the portion of radial reduction (16) is less than the diameter (D₂) of said introducing portion (10);
c) the distance of the portion of radial reduction (16) from the front surface (25) of the dowel (2) is determined such that, upon introducing of the mounting pin (1), the entrance of the rim (6) into the area between the front surface (25) and the annular groove (20) is only effected, after the introducing portion (10) of the mounting pin (1) has effected the spreading of the dowel (2); and
d) the area (20) of the dowel (2) between the annular groove (20) and the front surface (25) of the mounting element (2) and/or the rim (6) of the mounting pin (1) is made of elastically deformable material.

## Revendications

1. Dispositif de fixation pour fixer une pièce de meuble (4) à une pièce de construction (5) ou une autre pièce de meuble pourvue d'une broche de fixation (1), dans lequel une broche de fixation (1) pourvue d'une collerette (6) peut être insérée dans une cheville pourvue d'une rainure annulaire (20), la collerette (6) s'enclenchant de manière élastique dans la rainure annulaire (20),
**caractérisé en ce que**
(a) la cheville (2) est pourvue de fentes (11, 12, 13) et est expansible, et son ouverture de passage (7) présente un rétrécissement radial (16) dans la zone des fentes (11, 12, 13) ;
(b) la broche de fixation (1) présente, à son extrémité avant, une zone d'insertion (10) cylindrique, et le diamètre (D₁) dudit rétrécissement (16) est plus petit que le diamètre (D₂) de la zone d'insertion (10) ;
(c) la distance du rétrécissement (16) à la surface frontale (25) de la cheville (2) est définie de manière telle, que lors de l'insertion de la broche de fixation (1), l'entrée de la collerette (6) dans la zone (21) entre la surface frontale (25) et la rainure annulaire (20) s'effectue seulement lorsque la zone d'insertion (10) de la broche de fixation (1) a déjà produit l'expansion de la cheville (2) ; et
(d) la zone (21) de la cheville (2), comprise entre la rainure annulaire (20) et la surface frontale (25) de l'élément de fixation (2), et/ou la collerette (6) de la broche de fixation (1), est réalisée en un matériau pouvant être déformé de manière élastique.
